Europäisches Patentamt

European Patent Office

Office européen des brevets

(11) Publication number: **0 250 235**
**A1**

# EUROPEAN PATENT APPLICATION

(21) Application number: 87305395.3

(22) Date of filing: 17.06.87

(51) Int. Cl.4: **B 01 D 53/04**
**C 01 B 13/02**

(30) Priority: 17.06.86 EP 86304685
07.01.87 GB 8700264

(43) Date of publication of application:
23.12.87 Bulletin 87/52

(84) Designated Contracting States: DE ES FR GB IT

(71) Applicant: Negretti Aviation Limited
73-77 Landsdowne Road
Croydon Surrey CR9 2HP (GB)

(72) Inventor: Armond, John Walter
6a Trodds Lane
Merrow Guildford Surrey, GU1 2XR (GB)

Lewis, Nicholaslan
29 Silver Street
Stansted Essex (GB)

Higgs, Terence Edward
9 Hallingbury Close
Bishops Stortford Essex (GB)

(74) Representative: Bubb, Antony John Allen et al
GEE & CO. Chancery House Chancery Lane
London WC2A 1QU (GB)

(54) Improvements in and relating to pressure swing oxygen generating systems.

(57) In a pressure swing oxygen generation system comprising adsorption bedss (1,2) which are alternatively connected to a source (7) of compressed atmospheric air and a source of reduced pressure (8) by means of a switching valve (26), the control of the part cycle time after which switching of the valve (26) is effected, is achieved by continuously sensing the oxygen concentration at the outlet of each bed (1,2) that is for the time being producing the oxygen-enriched atmosphere. An oxygen sensor (17) is located sufficiently close to the outlet of each bed (1,2) that the oxygen concentration in the product gas will vary with respect to time as a function of the exhaustion of that bed which is producing the oxygen-enriched atmosphere. A control system (28) is arranged to monitor the variation of the oxygen concentration with respect to time in order to determine the appropriate instant for switching of the valve (26) at the end of each cycle.

FIG.1

**Description**

IMPROVEMENTS IN AND RELATING TO PRESSURE SWING OXYGEN GENERATING SYSTEMS

This invention concerns improvements in and relating to pressure swing oxygen generation systems.

So-called pressure swing oxygen generation systems are known. They generally comprise at least two beds of adsorption medium, means for cyclically coupling to each bed in turn a source of compressed atmospheric air, whereby, by adsorption of unwanted gas or gases within the bed, there is produced at a common outlet from the beds a continuous supply of atmospheric air of which the oxygen content is enriched in comparison with that of the air provided from the original source, each adsorption bed being purged of the waste gas or gases between the periods of time in which it is coupled to the source of compressed air, and means for controlling the duration of each period for which an adsorption bed is coupled to said source of compressed air in order correspondingly to control the mean concentration of oxygen in the air provided at said common outlet. They are utilised for the provision of an oxygen enriched air supply to the air crew of an aircraft when in flight. The generation of an oxygen enriched atmosphere is effected by the separation of nitrogen from atmospheric air by means of a zeolite molecular sieve adsorption bed that has the property of trapping nitrogen molecules by adsorption from atmospheric air pumped through the bed under pressure, whilst allowing oxygen molecules to pass. Thus, an oxygen enriched atmosphere is generated on the down-stream side of the separator bed and can be supplied, via a suitable reservoir and breathing regulator, to provide a breathable gas supply for the air crew.

Purging of waste gas from the adsorption bed when saturated with nitrogen molecules can be effected by application of reduced atmospheric pressure to the adsorption bed and/or by flushing the bed with a breathable gas derived from an alternative supply. Thus, by utilisation of a plurality of beds in timed relation such that a fresh bed becomes available during the operation of evacuating or purging a saturated bed, a continuously available source of oxygen enriched atmosphere can be provided.

It will be appreciated that in a system providing a life supporting breathing supply, it is a primary requirement that the oxygen concentration in the breathable atmosphere should be maintained reliably between close limits. In a breathing supply provided for an aircraft, it is further necessary that the oxygen concentration in the breathable atmosphere be adjusted in accordance with the altitude of the aircraft. These requirements necessitate that the oxygen concentration in the atmosphere supplied to the aircrew breathing apparatus be continuously monitored, and that the cycle of operation of the pressure swing oxygen generator be correspondingly adjusted to maintain the oxygen concentration in the reservoir of breathable atmosphere at the required level.

The oxygen concentration produced at the output of a pressure swing oxygen concentration system is dependent upon numerous factors, including the flow rate of the oxygen product, the volume of each adsorption bed, the configuration of the container for the adsorption medium, the type and density of packing of the adsorption medium, the gas pressures supplied to the system, the pressure in the waste outlet line, and the timing of the pressure swing cycle. Thus, a relatively complicated and correspondingly expensive control system is necessary in order to achieve the required performance of a pressure swing oxygen concentrator to be utilised in a life-support system. Difficulties arise in appropriately timing the cycle of the apparatus in order to achieve the required oxygen product concentration and hence optimum utilisation of the available volume of adsorption medium, particularly when, in order to achieve miniaturisation of the system, the available volume of medium is made relatively small. Furthermore, the accurate measurement of oxygen concentration at the output of the system, at varying altitudes, whilst achieving sufficiently rapid response of the sensor, also poses difficulties.

It is accordingly an object of the present invention to provide an improved oxygen concentration system of the pressure swing-type, wherein control of the operation of the system in order to produce an accurately, defined oxygen concentration, is improved in accuracy and simplified.

In accordance with one aspect of the invention, this object is achieved in a system of the kind referred to initially which is characterised by means for continuously monitoring the concentration of oxygen in the atmosphere produced at or near the output of each adsorption bed, and means responsive to an output signal from said monitoring means for controlling the cycle time at which a further adsorption bed is substituted for a monitored bed prior to purging of the latter.

Preferably, the said means for sensing oxygen concentration comprises an electrolytic cell for detecting the oxygen partial pressure utilising atmospheric air as a reference gas. A back pressure regulator may be provided in the supply of air as the reference gas, in order to maintain a constant absolute pressure of the reference gas, whereby the output signal of the cell is a function of the oxygen partial pressure of the monitored atmosphere, which may be at a varying pressure. Alternatively, both the sample and reference gases may be controlled to be at the same pressure whereby the output signal of the cell is a function of the percentage oxygen concentration of the monitored atmosphere.

Advantageously, the sensor for electrolytic sensing of the oxygen partial pressure comprises a zirconia sensor of a known type commercially available.

In order to ensure that the oxygen concentration sensor is responsive to the oxygen concentration of the instantaneous output of the product gas from an individual adsorption bed, rather than to the level of oxygen at the output of the complete system, the sensor is preferably connected in a gas flow path which is coupled to ambient atmosphere from a point immediately adjacent the outputs of the respective beds on the upstream side of non-return valves via which the beds are connected to the output of the system. Such a flow path should be restricted so that the rate of flow of gas to atmosphere for monitoring is low in relation to the rate of flow of product gas to the output of the system.

In such an arrangement the oxygen concentration measured by the sensor will vary in direct relationship to the state of exhaustion of the individual adsorption bed being monitored, and thus the variation of the output signal with respect to the time can be used as a basis for controlling the cycle time of the system to maintain a desired mean level of oxygen concentration in the breathable atmosphere provided at the output of the system.

According to one embodiment of the invention, the system may be controlled by detecting the point in time at which the value of the output signal from the sensor passes through a predetermined threshold value corresponding to a desired mean oxygen concentration.

Alternatively, means may be provided for integrating the output signal of the sensor in order to derive a value corresponding to the mean oxygen concentration of product gas provided from the monitored adsorption bed during the period for which it is coupled to the source of compressed air, the adsorption beds being switched at an appropriate time when the said value corresponds to the desired mean oxygen concentration.

Features of the present invention will now be explained in more detail with reference to the accompanying drawings, it being understood that the corresponding description is provided by way of example and that the particular combination of features illustrated and/or described is not to be taken as limiting in any way the underlying concept of concepts of the invention. The latter may comprise any novel combination of such features or mechanically equivalent features that would be recognised by one skilled in the art and having full knowledge of the state of the art existing at the time of filing of this Patent Application, as constituting an advantageous and non obvious advance in the state of the art.

In the drawings:

Figure 1 is a diagrammatic view of a pressure swing oxygen concentration system according to the invention.

Figure 2 is a diagram showing curves of oxygen concentration for corresponding relationships of flow rate of product gas and part cycle time in a system as shown in Fig. 1.

Figure 3 is a diagram illustrating one cycle of operation of the system of Fig. 1,

Figure 4 is a diagram showing a relationship between the oxygen concentration sensed in the system of Fig. 1 at the end of each part cycle as shown in Fig. 3 and the corresponding mean oxygen concentration of the breathable product atmosphere.

Figure 5 is a block circuit diagram of a control circuit for the system of Fig. 1, for use in controlling the operating cycle of Fig. 3,

Figure 6 is a diagram of a modified part of an arrangement according to Fig. 1 intended for control by means of an alternative control system,

Figure 7 is a flow chart illustrating the operation of the control system of the arrangement of Fig. 6, and

Figure 8 is a diagram illustrating a cycle of operation of the system of Figs. 6 and 7.

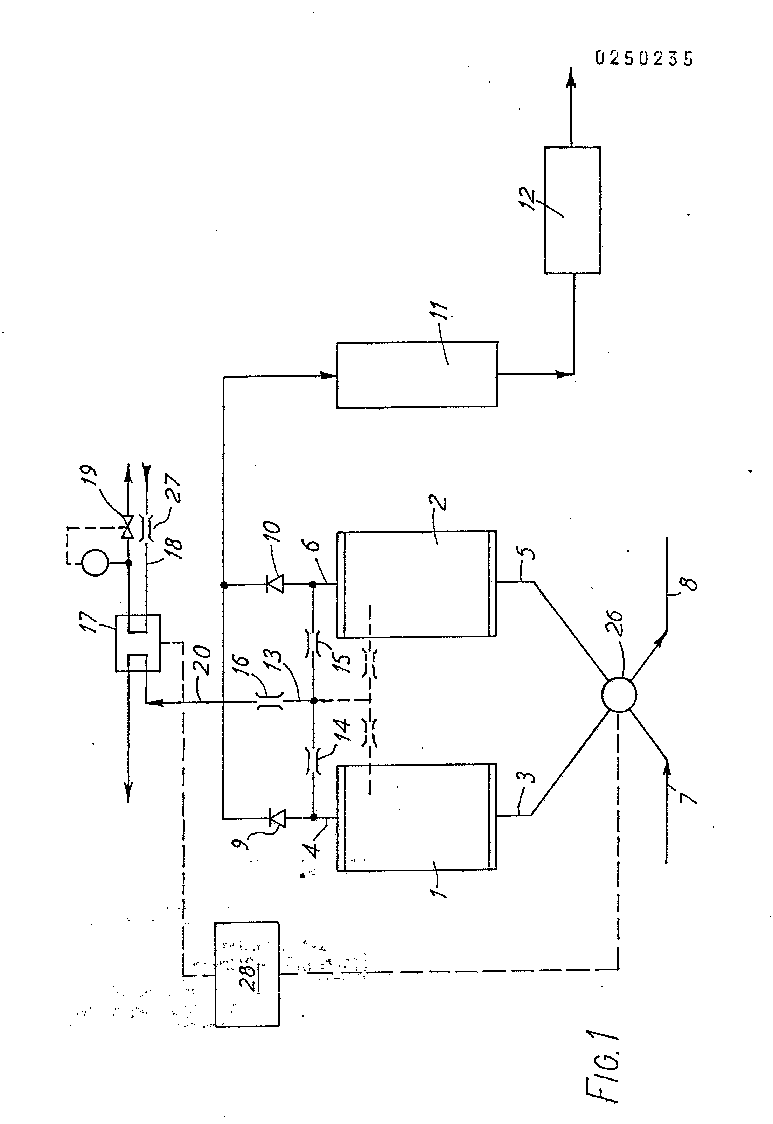

Referring to Fig. 1, there is shown in diagrammatic form a pressure swing oxygen generation system in accordance with one embodiment of the invention. The system comprises a pair of adsorption beds 1 and 2, which, in known manner, comprise canisters of suitable adsorption medium defining a gas flow path at respective ends of which are connected gas flow conduits 3,4,5,6. The conduits 3 and 5 are arranged to be connected in alternation, via a switching valve 26, respectively to a source of compressed atmospheric air indicated diagrammatically at 7, and to a source of reduced pressure indicated diagrammatically at 8.

Each of the conduits 4 and 6 are connected via a non-return valve, 9,10, to the inlet of a reservoir 11 for the storage of breathable atmosphere to be supplied, for example, to the air crew of an aircraft via a breathing regulator 12 which, in known manner, enables the breathable atmosphere to be drawn, on demand, at a breathable pressure, from the reservoir 11 of compressed gas. The outlets 4 and 6 are further connected in common, via T-shaped conduit 13 and restrictors or throttles 14,15 and 16 to a sensor 17 designed to measure the oxygen partial pressure of the gas flowing from the restrictor 16.

As will be explained below, it is desirable that the oxygen sensor 17 has a very rapid response. It has been ascertained that a so-called 'zirconia sensor' is capable of providing an accurate measurement of oxygen partial pressure with a very rapid response. However, such a zirconia sensor operates by the formation, at high temperature, of an electrolytic cell utilising, in addition to the oxygen enriched atmosphere to be measured, a reference gas, normally atmospheric air, containing oxygen at a predetermined partial pressure. Since the oxygen partial pressure of atmospheric air will vary with altitude, a reference air supply to the sensor 17 is provided via a throttle or restrictor 27 and an inlet 18, and is subject to the action of a back pressure regulating valve, indicated diagrammatically at 19, by means of which an absolute atmospheric pressure is set at the reference side of the oxygen sensing cell 17. The oxygen enriched supply of which the oxygen partial pressure is to be measured is supplied to the sensor 17 via a conduit 20 coupled to the restrictor 16. The breathable atmosphere of which a sample is supplied to the conduit 20 is allowed to bleed from the conduit 20 to the ambient atmosphere, for example that present in the air crew cabin, and thus the measure of the oxygen partial pressure obtained by the oxygen sensor 17 is effectively a measure of the oxygen partial pressure in the relevant gas, taken at the ambient pressure prevailing within the air crew cabin.

In the pressure swing oxygen enrichment system described, compressed air is supplied from the source 7, typically at a gauge pressure of approximately 2 bar, and is available for example from the compressor of the aircraft jet engine. A reduced pressure, for example that existing outside the aircraft cabin at altitude, is maintained at the outlet 8, and the valve 26 is regularly switched over, so that, in alternation, one of the two conduits 3 and 5 is connected to the source of compressed air 7, whilst the other is connected to the vacuum outlet 8. Thus, in known manner, as compressed air is passed through one of the canisters 1 and 2, an oxygen enriched atmosphere appears at the corresponding outlet 4 or 6, and passes via the corresponding non-return valve 9 or 10 to the reservoir 11. At the same time, waste gas that has been entrapped within the other one of the two canisters 1 and 2 is removed via outlet 8 by flushing the canister with oxygen enriched atmosphere derived from the other one of the two canisters via the conduit 13 and the restrictors 14 and 15.

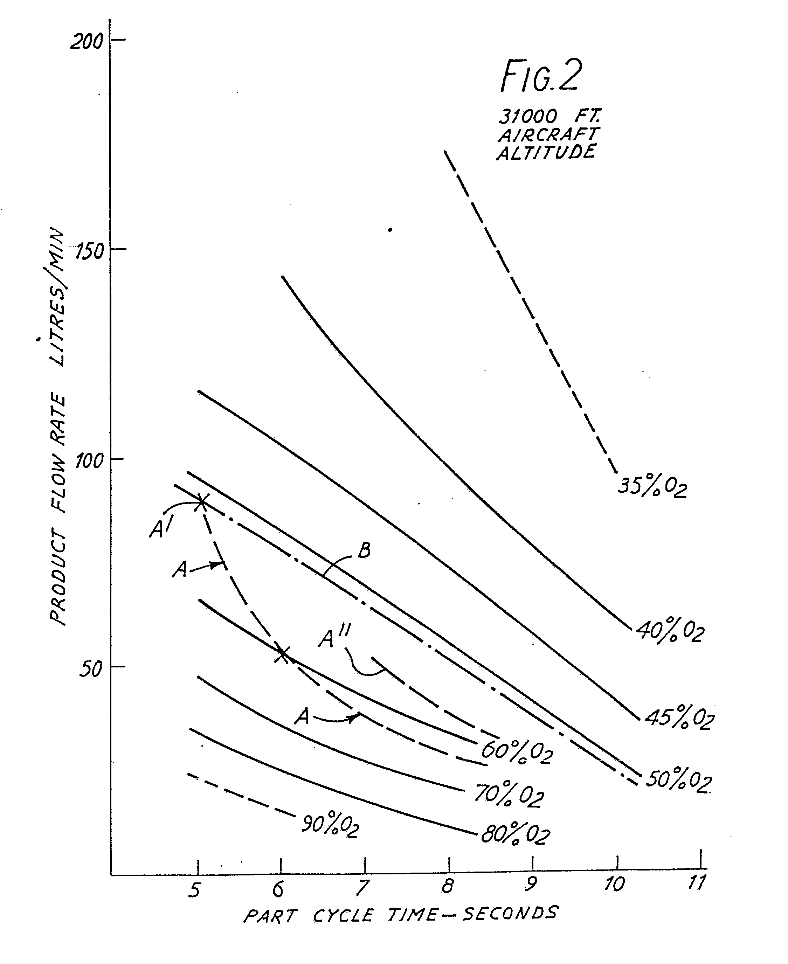

As will be appreciated by one skilled in the art, a given supply pressure at the source 7 and subatmospheric pressure at the outlet 8, the concentration of oxygen that will be available to the reservoir 11 from the outlet of the system will be dependent upon the rapidity with which the switching valve 26 is operated in relation to the rate at which the breathable atmospheric medium is drawn from the reservoir 11. For example, as shown in Fig. 2 there is illustrated in series of graphs, wherein, for a given oxygen concentration the part cycle time between respective operations of the valve 26 is shown on the abscissa, the correspondingly available rate of flow of breathable atmosphere for the same oxygen concentration being shown on the ordinate.

In the operation of a pressure swing oxygen generation system for the supply of breathable atmosphere to an air crew, it is a requirement that, at any given altitude of the aircraft, the concentration of oxygen supplied to the air crew should remain substantially constant regardless of the rate at which the breathable atmosphere is consumed. Moreover, it is a further requirement that the oxygen concentration in the breathable atmosphere be varied in accordance with the altitude of the aircraft and the corresponding cabin pressure, in order that the oxygen partial pressure in the atmosphere available to the air crew is maintained substantially constant at varying altitudes. The attainment of these objectives has hitherto proved extremely difficult.

The present Applicants have observed that, in an arrangement comprising an oxygen sensor connected as illustrated in Fig. 1, during operation of the switching valve 26 at a given frequency, a corresponding cyclical variation in the oxygen partial pressure can be measured by the oxygen sensor 17 in view of the very rapid response of the oxygen sensor that can be obtained with this construction and arrangement of the sensor. This enables a control of the cycle time of the system by actuation of the switching valve 26 not in response to measurement of the mean oxygen concentration at the output of the system, but under the control of a circuit indicated diagrammatically at 28 in Fig. 1 which responds to the variation of the output signal of the sensor 17 with respect to time.

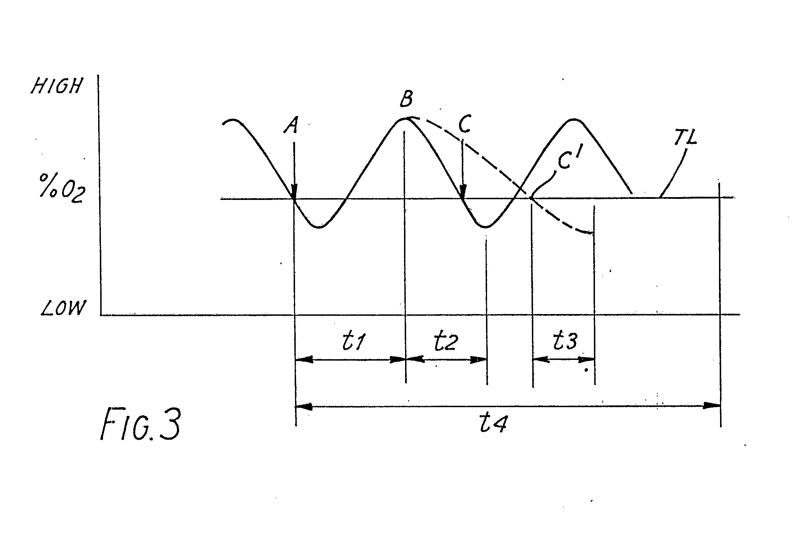

For example, there is shown in Fig. 3 a graph wherein the value of the output signal of the oxygen sensor 17 is indicated on the vertical axis against time shown on the horizontal axis. It will be seen that the variation in oxygen concentration is approximately sinusoidal, and it has further been ascertained that by utilising a given threshold value of the output signal of the sensor 17 to control switching of the valve 26 a surprisingly close correlation can be obtained between this threshold value and the mean oxygen concentration that is correspondingly made available to the reservoir 11 for a given rate of consumption of the breathable atmosphere.

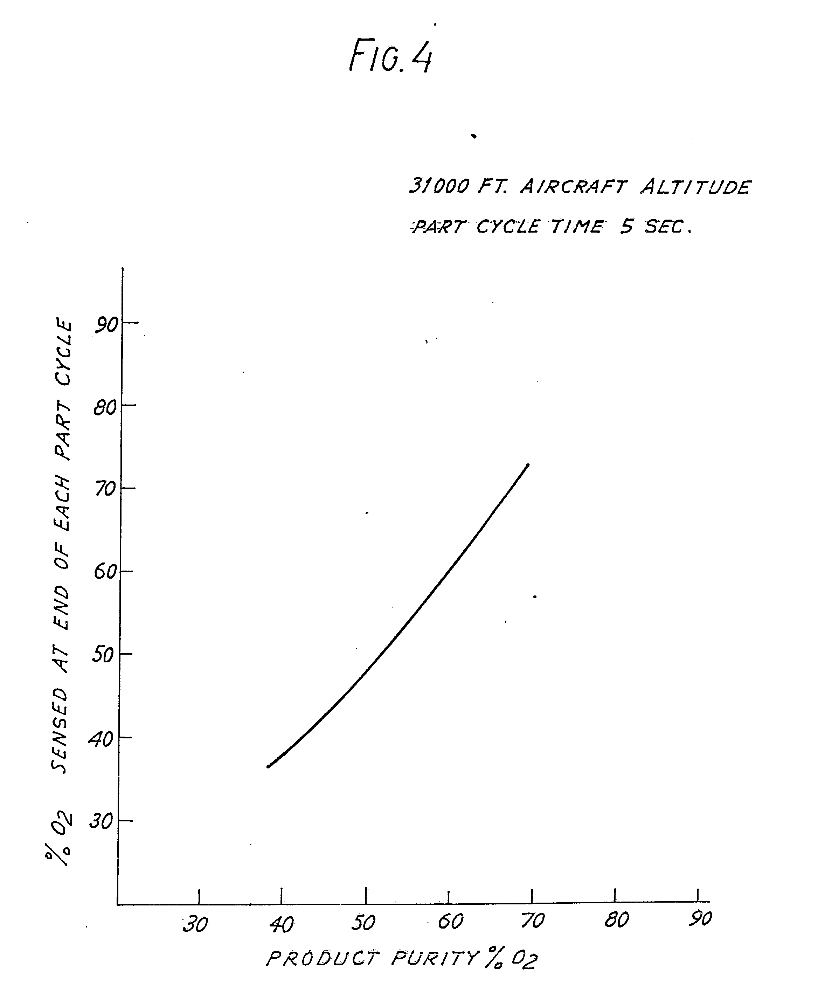

Fig. 4 is a graph wherein the mean percentage oxygen concentration obtaining within the reservoir 11 is shown on the abscissa, against a corresponding value on the ordinate of the oxygen concentration measured by the sensor 17 in the reducing direction when switching of the value 26 is initiated. The graph illustrated assumes that the corresponding consumption of the breathable atmosphere is such that a substantially constant cycle time occurs with the varying oxygen concentration.

Moreover, it has further been observed that since the sensor 17 provides a measurement of oxygen partial pressure at the cabin pressure of the aircraft, rather than the percentage oxygen concentration in the breathable atmosphere available from the reservoir 11, the system is capable of providing automatic adjustment of the oxygen concentration in the reservoir 11 to compensate for variation in altitude of the aircraft and corresponding variation in cabin pressure. For example, in the event of decompression occuring in the aircraft cabin, the corresponding variation in the oxygen partial pressure measured by the sensor 17 would produce the more rapid switching of the valve 26 required for the appropriate increase in oxygen concentration in the breathable atmosphere.

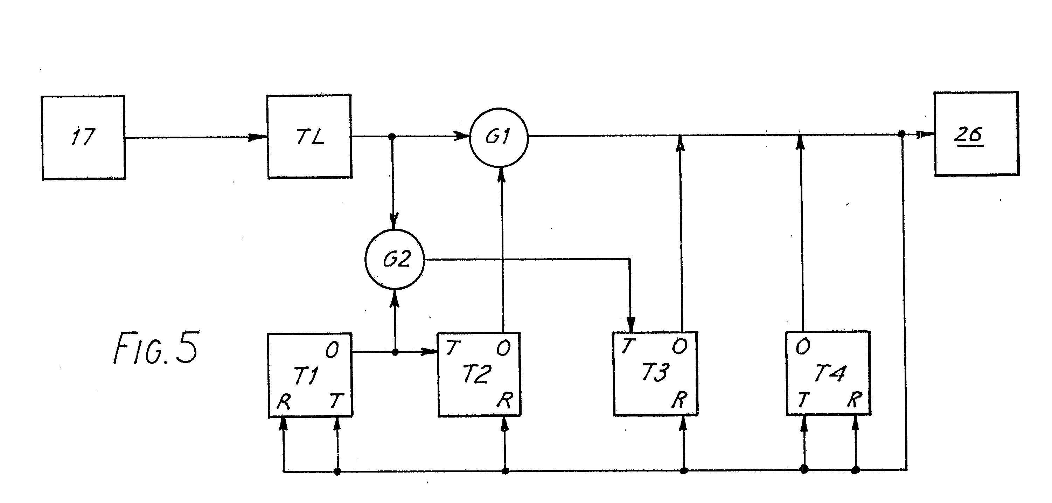

Referring now to Figure 5, there is shown a block circuit diagram of the control circuit 28 which utilises the output signal from the sensor 17 to effect timed switching of the changeover valve 26. The circuit comprises four individual timing circuits T1, T2, T3 and T4, each of which is illustrated, diagrammatically, as having a reset input R, a triggering input T and an output 0. In each case, after resetting of the timer by means of an input signal at R an input signal T will cause the output signal provided at 0 to change after a predetermined period determined by the setting of the timer. Although the terminals R and T of timers of T1 and T4 are shown as being connected in common for simplicity, it will be appreciated that by means known to one one skilled in the art the respective signals will be slightly delayed in time so that after resetting of the timer, it is substantially simultaneously triggered to commence its timing period.

The sensor 17 is illustrated as connected to a threshold level detecting circuit TL which may be preset to respond to a predetermined level of output signal from the sensor 17 corresponding to a desired oxygen partial pressure. The circuit TL provides a corresponding output signal to the input of two signal control gates G1 and G2. The output of signal gate G1 is coupled directly to a change-over actuator for the valve 26, whereas the output of gate G2 is connected to the same actuator via the triggering and output terminals of the timer T3. The signal gate G1 is so configured that it is only capable of passing the signal from the threshold level circuit TL whilst it also receives the timing signal provided from the output 0 of timing circuit T2 during the time period following triggering of the latter, whereas the signal gate G2 is arranged to block the signal from the threshold level circuit TL when it receives the corresponding timing signal from the output 0 of timer T1.

The operation of the circuit of Fig. 5 will now be explained in more detail with reference to Fig. 3.

It will be assumed that the cycle of operation of the circuit of Fig. 5 has commenced with the switching of the valve 26 by means of an output signal derived from the threshold level circuit TL as the output signal from the sensor 17 passes through the threshold level indicated at TL in Fig. 3, i.e. at point A on the signal waveform of the sensor 17. At the same time, all of the timing circuits T1 to T4 are reset by means of the output signal, timers T1 and T4 simultaneously being triggered to start their corresponding timing periods. Following the actuation of changeover valve 26, the oxygen concentration measured by the sensor 17 continues to fall below the switching threshold level, and then rises as the oxygen content of the product gas is enriched by the output from the freshly substituted adsorption bed. In order to prevent the signal from the threshold level detector TL from again triggering actuation of the valve 26, the gate G1 is at this time inhibited by the output from the timing circuit T2, whereas the gate G2 is inhibited by the output signal from the timing circuit T1. At the end of the timing period t1 determined by the timer T1, the signal from its output 0 changes state, thus removing the inhibition from the signal gate G2 and also triggering commencement of the timing period of the timer T2. The triggering of timer T2 causes a corresponding change in state of the signal at its output 0, whereby the inhibition of signal gate G1 is removed. Thus, if the level of the output signal of the sensor 17 again crosses the threshold TL during the timing period t2 set by timer T2, for example as illustrated at C on the waveform as shown in full lines in Fig. 3, the corresponding output signal will be passed by gate G1 directly to the actuating circuit of the valve 26, so that the part cycle of the system is completed and all of the timing circuits T1 to T4 are reset.

It will be noted that in the above described operating cycle of the device the timers T3 and T4 have no affect, since the point C at which the output waveform of the sensor 17 crosses the threshold level TL occurs before the end of the timing period t2. The operation of the circuit in the event that the point C lies outside the time period t2 will be described below, but to explain the purpose of the timer T3 reference will first be made to Figure 2.

As referred to above, Figure 2 illustrates the required relationship between the time between switching operations of the valve 26 and the rate at which the breathable atmosphere provided by the system is consumed, in order to maintain a constant given oxygen concentration in the breathable air supply (for a given altitude). Although, as described above with reference to Fig. 4, there is a direct relationship between the threshold level at which the output signal of the sensor 17 causes switching of the valve 26, and the resultant oxygen concentration of the breathable atmosphere, when the system is providing a constant flow of breathable gas, this relationship has been found to change when a varying demand for the product gas causes a significant change in the cycling time of the system. Thus, as shown in Fig. 2 the curve indicated in broken lines at A illustrates the variation in oxygen concentration in the product gas in response to variation of the cycle time of the system, when the threshold level is set to cause triggering of the changeover valve 26 at a constant measured oxygen partial pressure of, for example, 230 mm of mercury. The point A' on the curve A indicates the oxygen concentration that would be produced at a cycle time of 5 seconds, this value corresponding to the same value that would appear on the curve illustrated in Fig. 4. In order to provide a constant oxygen concentration with varying cycle time, the ideal response curve of the system containing the point A', would be the curve indicated in broken lines at B in Fig. 2.

In order to cause the response of the system to approximate more closely to the ideal curve B, the timer T3 is caused to delay the switching point of the changeover valve 26, after expiry of the time period t2 illustrated in Fig. 3, in the following manner. Referring again to Fig. 3 it will be assumed that, owing to a reduced demand for breathable atmosphere, the variation in the flow of gas through the system is such that the output signal from the sensor 17 is caused to follow the broken line in Fig. 3, so that the signal crosses the threshold level TL not at point C, but at the point C', after expiry of the time period T2. At this time, the change in state of the output signal from the timer T2 after expiry of its timing period has blocked the signal gate G1 and therefore the output signal from the threshold level detector TL cannot pass directly to the changeover valve actuating means, but passes via the signal gate G2 to trigger the timer T3. After a delay determined by the timing period of the timer T3, a corresponding output signal is generated to trigger the changeover of the valve 26, and the correspondingly increased cycle time of the system has the effect of displacing the response curve A of Figure 2 to follow the path A'' illustrated in broken lines, thereby modifying the response curve to correspond more closely with the ideal curve B.

The purpose of the timer T4 is to set an overall maximum cycle time of the system, so that in the absence of any signal from the threshold level detection circuit TL during a maximum time period t4 of, for example, ten seconds, the changeover of the valve 26 is automatically triggered. This provides for reliable start-up of the system, and also takes account of other eventualities in which a threshold level detection signal might not occur.

It will be appreciated that the apparatus described above, by enabling an accurate determination of the point of exhaustion of each filtration bed, and providing a rapid and accurate means for sensing the oxygen concentration of the product gas, will enable, in relation to known systems, a considerable simplification of the known processes for the control of a pressure-swing oxygen enrichment system.

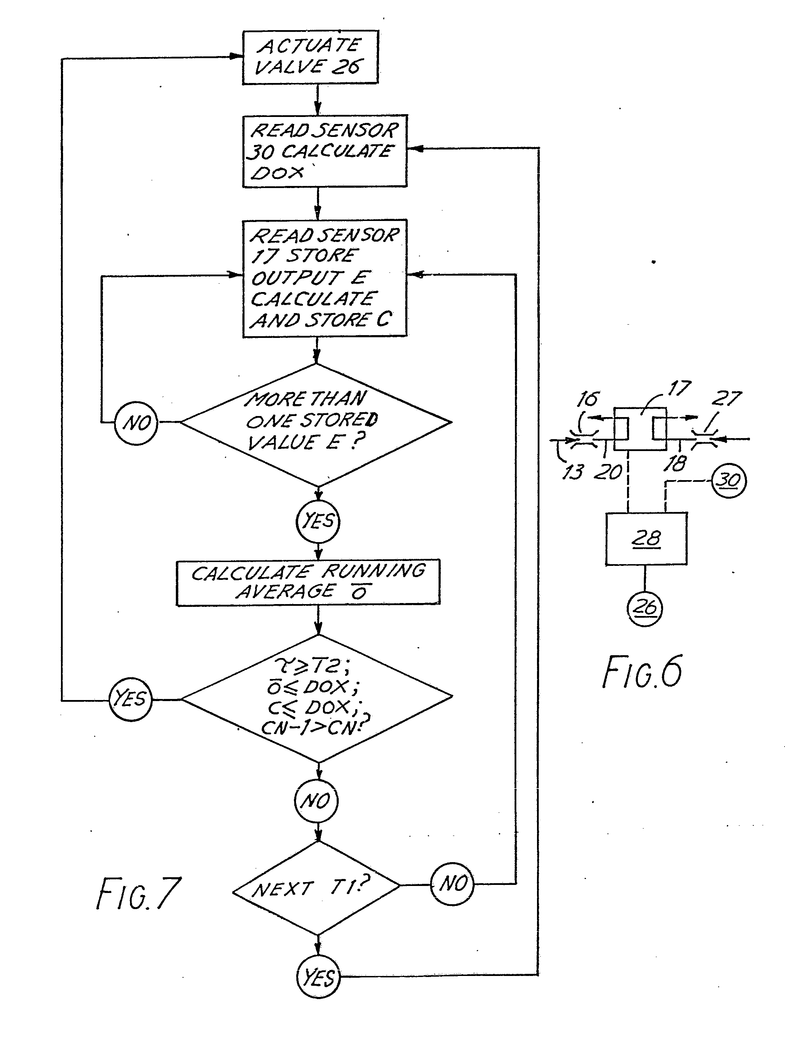

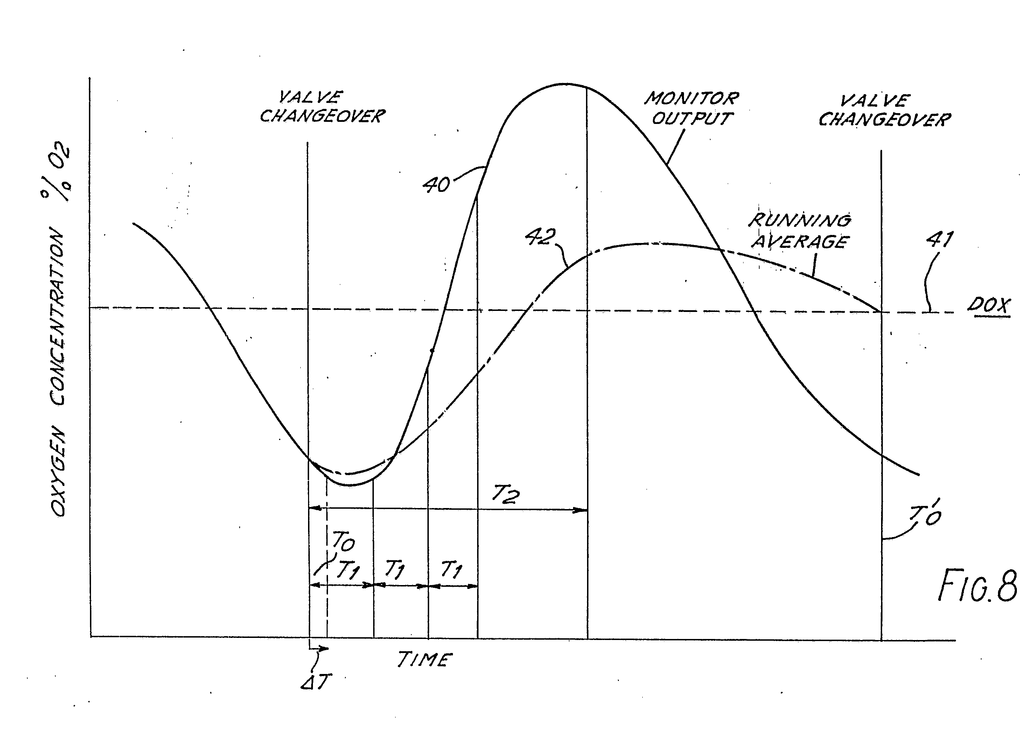

Referring to Fig. 6, there are shown the relevant parts of an arrangement similar to that of Fig. 1, utilising a modified control system, wherein the control circuit 28 is replaced by a microprocessor. For simplicity Fig. 6 shows only those components of Fig. 1 that are modified, it being understood that the remainder of the arrangement is present in the form as shown in Fig. 1. It will be noted that in Fig. 6 the back pressure control valve 19 associated with the reference side of the oxygen sensor 17 is omitted, the exhaust outlets of both the sample and reference sides of the sensor 17 being coupled to the same ambient atmospheric pressure, e.g. the cabin pressure of an aircraft. The oxygen monitor is a 'zirconia' cell operating according to the Nernst equation, which gives an output which is a function of the ratio of the oxygen partial pressures in the sample and reference sides of the cell. The reference side of the sensor is provided with atmospheric air, which, as is well known, has a constant oxygen concentration regardless of altitude, and thus the output signal from the monitor 17 can be utilised directly to provide a measure of the oxygen concentration of the sample gas derived from the conduit 20. The microprocessor controller 28 is arranged to receive signals from the sensor 17 and from a pressure sensor 30 which is arranged to sense the cabin pressure of an aircraft of which the occupants are to breath the atmosphere provided from the breathing regulator 12. The controller is arranged to provide an output signal to the change-over valve 26, for actuation thereof to determine the cycle of operation of the system as shown in Fig. 8.

The graph of Fig. 8 is similar to that of Fig. 3 and the curve represents the oxygen monitor output signal which follows the outlet oxygen content of whichever of the beds 1 and 2 of Fig. 1 is at the higher pressure, i.e. whichever bed is sending product gas to the reservoir 11. Thus after valve changeover at the time To the oxygen content soon rises, holds steady for a time and then begins to fall as the bed approaches exhaustion and valve changeover occurs again at time T'o.

For the product control the changeover times To and T'o need to be made so that the average oxygen concentration in the reservoir 11 provides the required oxygen partial pressure at the aircraft cabin pressure.

The microprocessor controller 26 is not illustrated in detail, but will be understood to incorporate, in conventional manner, random access memory, a master clock oscillator, a processor unit and the appropriate program instructions. A flow chart illustrating the algorithm for operation of the controller is illustrated in Fig. 7, and this will now be explained with reference to Fig. 8 which is a graphic illustration of one cycle of operation of the system, wherein time is shown on the horizontal axis and oxygen concentration on the vertical axis. As in the case of the cycle illustrated in Fig. 3, the end of each of cycle of operation of the system and the commencement of the next cycle, corresponds to the point at which the valve 26 is switched over, as indicated at To at the beginning of the cycle under consideration and T'o at the end thereof. The curve 40 represents the output signal from the sensor 17, illustrating the variation with time of the percentage oxygen concentration output from the conduit 20 of the system, and as already explained above, the oxygen concentration follows the curve illustrated as a consequence of the pressurisation and exhaustion of the relevant bed 1 or 2. It will also be understood that this curve is not constant with respect to time but varies as a function of the demand for breathable atmosphere. The broken line 41 illustrates a required value of oxygen concentration that is to be available in the atmosphere drawn from the breathing regulator 12 after the fluctuation of oxygen concentration represented by the line 40 has been averaged out following storage of the product gas in the reservoir 11. Although this value is shown as being constant in Fig. 8, it will be appreciated from the following description that the value may vary during the cycle of operation of the system as a result of appropriate calculations made by the microprocessor of the control system 28.

Following commencement of the cycle of operation at time To, the microprocessor is initially caused to calculate from the output of the pressure sensor 30 a value DOX (demand oxygen purity) of oxygen concentration that is appropriate for the crew of the aircraft to breath. This value corresponds to the line 41 of Fig. 8 and is stored for further reference. After an increment of time $\Delta$ T the microprocessor is caused to respond to the output from the sensor 17, to store the corresponding value (E) of the signal and to calculate therefrom the appropriate value (C) of the oxygen concentration in the sample gas. The value (E) is stored and held in memory until the end of the cycle of operation of the system, whereas the value (C) is stored in a memory that is updated each time the microprocessor responds to the output of sensor 17. After this initial response to the sensor 17 the microprocessor is again caused to respond to the output of the sensor 17 after a second increment of time $\Delta$ T. Following the storage of more than one value (E) the microprocessor is then caused to form from the stored values E1-EN a value corresponding to the running average of oxygen concentration output from the conduit 20 since the commencement of the operating cycle, by integration. Following this integration step the microprocessor is then caused to apply a test for the following condition

$$\tau \geq T2 \text{ and } \overline{o} \leq DOX \text{ and } C_N \leq DOX \text{ and } C_N > C_{N+1}$$

where $\tau$ corresponds to the elapsed time from the instant To, T2 corresponds to an arbitrary time for the running average of oxygen concentration ($\overline{o}$) and the instanteous measured oxygen concentration ($C_N$) represented by the line 40 in Fig. 8, to rise above the maximum practical value of DOX as represented by line 41. In a typical system this time period might, for example, be in the region of 5 seconds. If the result of the test is found to be true, then the microprocessor control will provide an output signal to effect changeover of the valve 26 and commence another cycle of operation. If the output is false, then the processor will proceed to the next step, wherein a test is made to see whether $\tau \geqq T1$, where T1 is an arbitrary time substantially greater than $\Delta T$, and less than T2, e.g. one second. If the result of this test is true then the microprocessor returns to the previous step of recording the output of the cabin pressure sensor 30, whereas if the output is false the microprocessor returns to the step recording the output of the sensor 17.

The effective result of the above described algorithm is that the next actuation of the changeover valve 26 is effected when the running average of the oxygen concentration measured by sensor 17 becomes equal to the last updated value of the required oxygen concentration DOX, provided that the cycle has continued for a sufficient time for both the instantaneous value $C_N$ of measured oxygen concentration (line 40) and the running average thereof $\overline{o}$, illustrated by line 42 in Fig. 8, to rise above the value DOX, and provided that the instantaneous value $C_N$ is not still above the value DOX. Control of the switching of valve 26 in accordance with this function of the measured parameters thus enables accurate control of the oxygen concentration at the output of the breathing regulator 12, without instability or oscillation of the value of oxygen concentration at this output, as would occur if the measurement of the oxygen concentration were made on the downstream side of the reservoir 11 after averaging of the instantaneous oxygen concentration 40.

It will be appreciated that the time $\Delta T$ should be as short as possible consistent with the response time of the sensor 17. A suitable increment of time may, for example, be in the region of 50 milliseconds.

It will be appreciated that modifications may be made to the system described without departing from the scope of the invention. For example the oxygen supplied to the sensor 17 of Fig. 1 could be derived from a point in the flowpath through the adsorption bed 1 or 2 in advance of the outlet of the bed, as indicated by the connections shown in broken lines in Fig. 1.

Also, although it has been assumed that the changeover valve 26 effects simultaneous changeover of the pressurising and purging conduits 7 and 8 coupled to the respective beds 1 and 2, the relative timing of the corresponding connections may be varied to modify the characteristics of the system. For example, by delaying the connection of the purging conduit 8 relatively to that of the pressure conduit 7, the pressure at the output of the system may be maintained during the initial pressurisation of the bed newly connected to conduit 7.

## Claims

1. A pressure swing oxygen concentration system of the kind comprising at least two beds (1,2,) of adsorption medium, means (26) for cyclically coupling to each bed in turn a source (7) of compressed atmospheric air, whereby, by adsorption of unwanted gas or gases within the bed, there is produced at a common outlet from the beds a continuous supply of atmospheric air of which the oxygen content is enriched in comparison with that of the air provided from the original source, each adsorption bed (1,2,) being purged of the waste gas or gases between the periods of time in which it is coupled to the source of compressed air, an oxygen sensor (17) for sensing the concentration of oxygen in the gas produced by the system and means (28) responsive to the output of the sensor for controlling the operation of the system characterised in that the oxygen sensor (17) is arranged to receive product gas directly from that bed (1,2) producing enriched atmosphere, whereby the sensed oxygen concentration varies with respect to time as a function of the state of exhaustion of the bed (1,2) and that said control means (28) is arranged to monitor the change in said oxygen concentration with respect to time in order to determine the instant in each cycle at which said coupling means (26) is to be actuated.

2. A system as claimed in Claim 1, characterised in that the said control means (28) comprises means responsive to reduction of the sensed oxygen concentration to a predetermined threshold level.

3. A system as claimed in Claim 2, characterised in that the said oxygen sensor (17) comprises an electrolytic cell for detecting the oxygen partial pressure in a sample gas utilising atmospheric air as a reference gas.

4. A system as claimed in claim 3, characterised in that a back pressure regulator (19) is provided in the said cell for the reference gas, in order to maintain a constant absolute pressure of the reference gas, whereby the output signal of the said oxygen sensor is proportional to the oxygen partial pressure of the sample gas.

5. A system as claimed in Claim 2 or 3, characterised by means whereby both gases supplied to said cell can be maintained at the same ambient pressure whereby the output signal of said oxygen sensor is proportional to the oxygen concentration of the sample gas.

6. A system as claimed in Claim 4 or 5, characterised in that said system comprises two adsorption beds (1,2) each having conduits (3,4;5,6) coupled to respective ends of a gas flow path provided by the bed, one conduit (3;5) coupled to each bed being in communication with a changeover valve (26) arranged in each of two alternative positions to couple one of the two conduits (3;5) to a source of compressed atmospheric air (7), that the other conduit (4;6) from each bed is coupled via a nonreturn valve (9;10) to a reservoir (11) for storing the oxygen enriched product gas, that the gas flow path of each bed is coupled, at a point upstream of said nonreturn valve (9;10) and at or adjacent that end of the flow path communicating with said other conduit (4; 6), via a throttle or flow restrictor (14;16) to a common conduit (13) providing a gas flow path (20) to said oxygen concentration sensor (17), the latter providing a flow outlet to ambient atmosphere for the product gas, whereby measurement of the oxygen concentration is effected at substantially the ambient atmospheric pressure.

7. A system as claimed in Claim 6, characterised in that a further flow restrictor (16) is provided in said common conduit (13), whereby, during each part-cycle of the system, oxygen enriched product gas can flow from the restrictor (14;15) coupled to one bed (1;2) both to the oxygen concentration sensor (17) and to the bed (2;1) which is being purged of waste gas.

8. A system as claimed in any preceding claim, characterised in that the said control means (28) is arranged to integrate the signal from the said oxygen sensor (17) in order to determine the running mean of the oxygen concentration of the oxygen enriched gas produced during each cycle of the system and to actuate said coupling means (26) when said running mean falls to a predetermined level.

9. A system as claimed in claim 8 as appended to claim 5, characterised in that the said ambient atmospheric pressure is the cabin pressure of an aircraft, that said system includes a pressure sensor (30) for sensing the said ambient pressure and that said control means (28) is arranged to calculate the said running mean in accordance with said sensed pressure.

10. A system as claimed in claim 9 as appended to claim 2, wherein the said control means is a microprocessor programmed to respond to the said oxygen sensor (17) at increments of time $\Delta T$, to respond to said pressure sensor at increments of time T1 that are greater than a multiple of the increment $\Delta T$, and to actuate the said coupling means (26) at minimum increments of time T2 sufficient to allow both the said sensed oxygen concentration and the said running mean to rise above said predetermined levels at the initial part of each cycle of the system.

FIG.1

0250235

FIG.2

31000 FT. AIRCRAFT ALTITUDE

FIG.3

## FIG. 4

31000 FT. AIRCRAFT ALTITUDE
PART CYCLE TIME 5 SEC.

*Fig. 5*

0250235

FIG.7

FIG.6

FIG.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | EP-A-0 207 686 (NEGRETTI AVIATION LTD) (Publ. 7-1-1987) * Whole document * | 1-7 | B 01 D 53/04 C 01 B 13/02 |
| A | EP-A-0 129 304 (NORMALAIR-GARRETT) * Claim 5 * | 1-5 | |
| A | EP-A-0 046 369 (NORMALAIR-GARRETT) * Page 3, lines 13-18; page 5, lines 1-21; figure 1 * | 1,2,6 | |
| A | EP-A-0 121 796 (LITTON SYSTEMS INC.) | | |
| A | US-A-4 516 424 (R.D. HOWLAND) | | |

TECHNICAL FIELDS SEARCHED (Int. Cl.4)

B 01 D 53/00
C 01 B 13/00
G 01 N 7/00

The present search report has been drawn up for all claims

| Place of search | Date of completion of the search | Examiner |
|---|---|---|
| THE HAGUE | 23-09-1987 | BOGAERTS M.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82